# EUROPEAN PATENT SPECIFICATION

(11) **EP 2 521 458 B1**
(45) Date of publication and mention of the grant of the patent: **17.12.2014**
(21) Application number: 11703267.2
(22) Date of filing: 06.01.2011
(51) Int. Cl.: A23L 1/317, A21D 2/16, A23D 9/007, A23D 9/05, A23D 7/005

(54) **AN EDIBLE PRODUCT COMPOSED OF A PLURALITY OF DISCRETE FAT PIECES**
Essbares Produkt aus mehreren einzelnen Fettteilen
Produit comestible composé d'une pluralité de morceaux gras discrets

(30) Priority: 05.03.2010 EP 10155602; 07.01.2010 MY 1000057
(43) Date of publication of application: 14.11.2012
(73) Proprietor: Sime Darby Malaysia Berhad, Kuala Lumpur, 50350 (MY)
(72) Inventor: Zieverink, Martinus Mathilda Pieter, 1056 CV Amsterdam (NL); Schaink, Hermanus Martinus, NL-6701 AT Wageningen (NL); Pyett, Stacy Christine, NL-6721 GX Bennekom (NL); Grandia, Jeroen, NL-6717 LH Ede (NL); de Ruiter, Gerhard Adriaan, NL-5473 JE Heeswijk-Dinther (NL)
(74) Representative: Nederlandsch Octrooibureau
(86) International application number: PCT/NL2011/050011
(87) International publication number: WO 2011/084059

(56) References cited:
- WO-A1-03/059078
- WO-A2-2008/025034
- GB-A- 1 238 336
- US-A1- 2008 193 605

## Description

### TECHNICAL FIELD OF THE INVENTION

The present invention relates to an edible product that is composed of a plurality of discrete fat pieces that are in direct contact with each other. The edible products of the present invention can take the form of, for instance, fat flakes, fat powders or fat granulates. The discrete fat pieces comprised in the edible products of the invention contain appreciable levels of liquid oil. However, despite the presence of significant quantities of liquid oil, these discrete pieces do not tend to form clumps by sticking together.

The invention also relates to the use of these edible products in the manufacture of foodstuffs and nutritional preparations.

### BACKGROUND OF THE INVENTION

Edible products consisting of fat flakes or fat particles that are in direct contact with each other are known in the art. These fat products offer the advantage that they enable fat to be dosed and processed more easily than in case large chunks of fat are used.

US 4,891,233 describes a pastry making composition comprising, in combination, a premeasured amount of pastry-making flour, a premeasured amount of flakes of fat, said flakes of fat having a minimum solids content index (SCI) of about 50% at about 50 °F (10 °C), and a maximum SCI of about 10% at about 105 °F (40.6 °C), and a sufficient amount of a liquid fat generally distributed throughout the composition for coating at least portions of said flakes to promote adherence of said composition to facilitate making a pastry dough.

In the US patent it is explained that there are special requirements for a lower value for the SCI in the lower temperature range of 50 to 70 °F, which is referred to as the "agglomeration boundary", and an upper value in the upper temperature range of 85-105 °F which is referred to as the "appearance boundary". The agglomeration boundary is said to be determined by an SCI value range which first avoids the flakes of fat agglomerating together during storage and loosing their identify and second, provides flakes which are sufficiently malleable such that when incorporated into the baking ingredients at room temperature, they may be easily worked into the dough making composition. At the other end of the scale, the appearance boundary is defined by the necessity that the flakes of fat do not have too high of an SCI value at the upper temperatures, so that, when baked, the flakes of fat melt completely at the right time in the baking process to produce the desired pockets and flakiness, and thus avoid a "cratering" effect. The cratering effect is due to the fat not melting soon enough and due to gravity.

US 5,064,669 describes process for preparing particulate flowable flavoring powders comprising:
- heating a high melting point normally solid encapsulating material having a melting point of 130-195 °F, and at least one emulsifier to melt the encapsulating material and emulsifier;
- admixing the melted encapsulating material and emulsifier;
- mixing at least one water-containing flavor composition containing at least 15% water with a texture conditioning agent which is a silicon dioxide, powdered cellulose, puffed dextrin, maltodextrin, or pregelatinized starch;
- mixing the flavor composition and texture conditioning agent with the molten mixture of encapsulating agent and emulsifier to obtain a homogeneous mixture in the form of an emulsion; and
- chilling the flavor composition-containing mixture to provide discrete particles of solid encapsulated flavoring agent, the encapsulating material and emulsifier being different.

US 6,531,173 describes a method of forming a food product which includes therein a hydrogenated fat, the method comprising: providing a spray of the food product in liquid form; contacting the spray with a cryogen for cooling the spray and effecting a rapid conversion of the liquid food product to a solid; and controlling a cooling rate of the cryogen contacting the spray for controlling the cooling of the food product.

The fat component of the aforementioned fat flakes and fat particles consists of a high melting fat. The use of liquid oils in these types of products is avoided as the introduction of liquid oil inherently increases the stickiness of the fat flakes or fat particles. Especially if the product are subjected to varying temperature conditions, fat flakes or fat particles containing appreciable levels of liquid oil will tend to stick together.

It will be understood, however, that from a health perspective it would be desirable to replace at least a part of the high melting fat in the aforementioned particulate edible products by a liquid oil containing substantial levels of unsaturated fatty acids, whilst at the same time ensuring that the pieces making up the edible product do not clump together.

### SUMMARY OF THE INVENTION

The inventors have discovered that the latter *desideratum* can be realized by an edible product that comprises a plurality of fat pieces in direct contact with each other, wherein these fat pieces comprise a solid, non-sticky continuous fat phase and a liquid oil containing encapsulate that is homogeneously dispersed throughout said fat phase.

The edible product of the present invention is composed of a plurality of discrete fat pieces that are in direct contact with each other, each fat piece comprising:
- a solid continuous fat phase having a solid fat content at 25 °C (N₂₅) of at least 5 wt.%; and
- an oil encapsulate that is homogeneously dispersed throughout the continuous fat phase, said oil encapsulate containing a liquid oil and an encapsulation matrix that envelops the liquid oil;
wherein the product contains at least 15% of liquid oil by weight of the continuous fat.

The invention also provides a process of preparing a product selected from a foodstuff and a nutritional preparation, said process comprising incorporating into said product 0.3-50% of the above described edible product.

The inventors have unexpectedly found that the edible products of the present invention perform well in a variety of product applications, such as bakery products, soups, sauces, creamers and reconstitutable drinks.

### DETAILED DESCRIPTION OF THE INVENTION

Accordingly, one aspect of the invention relates to an edible product that is composed of a plurality of discrete fat pieces that are in direct contact with each other, each fat piece comprising:
- 15-80 wt.% of a solid continuous fat phase having a solid fat content at 25 °C (N₂₅) of at least 5 wt.%;
- 20-85 wt.% of an oil encapsulate that is homogeneously dispersed throughout the continuous fat phase, said oil encapsulate containing 40-95 wt.% of liquid oil and 5-60 wt.% of an encapsulation matrix that envelops the liquid oil; and
- 0-50 wt.% of a dispersed aqueous phase;
wherein the product contains at least 15% of liquid oil by weight of the continuous fat phase and wherein the continuous fat phase, the oil encapsulate and the optional dispersed aqueous phase together represent at least 90 wt.% of the edible product.

Unless indicated otherwise, both the terms "oil" and "fat" as used herein encompass lipids such as triglycerides, diglycerides, monoglycerides, free fatty acids and phosphoglycerides (e.g. lecithin).

The term "solid continuous fat phase" as used herein refers to a continuous fat phase that does not exhibit a tendency to flow at a temperature of 20 °C.

The term "liquid oil" as used herein, refers to an oil that is pourable at 20 °C.

The term "encapsulation matrix" as used herein encompasses all the material within the oil encapsulate that envelops the liquid oil. Thus, in case the encapsulate contains multiple encapsulation layers, these layers together constitute the encapsulation matrix.

The term "fatty acid" as used herein encompasses free fatty acids as well as fatty acid residues contained in, for instance, triglycerides.

The N-value Nt equals the solid fat content of a fat at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of fatty acid residues and free fatty acids contained in the fat. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

As explained herein before, the edible product of the present invention can take the form of, for instance, flakes, a powder, a granulate or a collection of fat articles, such as fat sticks. Accordingly, the average weight of the individual discrete fat pieces can very widely, e.g. from 0.1 mg to 250 g. Preferably, the average weight of the individual discrete fat pieces lies within the range of 0.2 mg to 50 g. Even more preferably, the average weight of the aforementioned fat pieces is within the range of 1 mg to 10 g. Most preferably, said average weight is within the range of 5 mg to 1 g.

The discrete fat pieces in the present edible product are preferably selected from flakes, beads, particles, discs, cubes, cylinders and sticks. More preferably, said fat pieces are selected from, flakes, beads, discs, cubes and cylinders. Most preferably, the fat pieces contained in the present edible product are flakes. Typically, the flakes have an average thickness in the range of 0.1-10 mm. More preferably, the flakes have an average thickness of 0.2-3 mm. The average length to thickness ratio of the flakes is usually within the range of 5:1 to 200:1. Preferably, said ratio lies within the range of 8:1 to 100:1.

The continuous fat phase and the oil encapsulate together represent the bulk of the edible product of the present invention. Typically, the continuous fat phase and the oil encapsulate together represent at least 80 wt.% of the edible product, more preferably at least 90 wt.% of the edible product. Most preferably, the continuous fat phase and the oil encapsulate together represent at least 98 wt.% of the edible product.

The particle size of the oil encapsulate employed in the edible product can vary within a relatively wide range. Typically, the oil encapsulate has a weight averaged diameter of 0.02-200 µm. Preferably, the oil encapsulate has a weight averaged diameter of 0.05-20 µm, most preferably of 0.1-10 µm.

The oil encapsulates employed in accordance with the present invention advantageously have a high payload of liquid oil. Preferably, the oil encapsulate contains 40-90 wt.% of liquid oil and 10-60 wt.% of an encapsulation matrix. Even more preferably, the oil encapsulate contains 50-85 wt.% of liquid oil and 15-50 wt% of an encapsulation matrix.

The present invention enables the preparation of a non-clumping edible product that contains 40-500% of liquid oil by weight of the continuous fat phase. Advantageously, the product contains 40-300% of liquid oil by weight of the continuous fat phase. Most preferably, the product contains 50-150% of liquid oil by weight of the continuous fat phase.

The solid continuous fat phase of the present product preferably contains at least 80 wt.% of fat. Even more preferably, the continuous fat phase contains at least 90 wt.%, most preferably at least 95 wt.% of fat. The fat contained in the aforementioned continuous fat phase typically contains at least 80 wt.% of triglycerides. More preferably said fat contains at least 90 wt.% of triglycerides. Most preferably, at least 95 wt.% of the fat contained in the continuous fat phase consists of triglycerides.

The fat contained in the continuous fat phase advantageously contains not more than a limited amount of unsaturated fatty acids, e.g. less than 40 wt.% of unsaturated fatty acids. Stickiness of the individual fat pieces can be minimized effectively by employing a continuous fat phase that contains only limited amounts of unsaturated fatty acids. Even more preferably, the continuous fat phase contains less than 30 wt.% of unsaturated fatty acids, most preferably less than 20 wt.% of unsaturated fatty acids.

The adverse effect of unsaturated fatty acids contained in the continuous fat phase is particularly pronounced in case these unsaturated fatty acids are largely present in the form of triglycerides that contain two or three unsaturated fatty acid residues, as opposed to triglycerides that contain only one unsaturated fatty acid residue. Preferably, less than 20 wt.% of the triglycerides contained in the continuous fat phase are triglycerides that contain two or three unsaturated fatty acid residues. Even more preferably, triglycerides containing two or three unsaturated fatty acid residues represent less than 10 wt.%, most preferably less than 5 wt.% of the triglycerides contained in the continuous fat phase.

In order to minimize the risk that the fat pieces in the present edible product will clump together, it is preferred to employ a continuous fat phase having an N₂₅ of at least 8 wt.%, more preferably of at least 20 wt.% and most preferably of at least 30 wt.%.

In order to reduce the risk of clumping at elevated temperatures and/or as a result of temperature cycling, it is preferred to employ a continuous fat phase having a solid fat content at 30 °C (N₃₀) of at least 4 wt.%. More preferably, the continuous fat phase has an N₃₀ of at least 15 wt.%, most preferably of at least 25 wt.%.

The continuous fat phase of the fat pieces typically has a slip melting point in excess of 30 °C, more preferably in excess of 35 °C and most preferably in excess of 40 °C.

Examples of oils that may suitably be employed in the oil encapsulate of the present product - preferably in an amount of at least 80% by weight of the liquid oil - include fish oil, algae oil, sunflower oil, rapeseed oil, linseed oil, soybean oil, maize oil, olive oil, wheat germ oil, rice bran oil and combinations thereof. More preferably, the latter oils are employed in an amount of at least 90%, most preferably at least 95% by weight of the liquid oil.

The bulk of the liquid oil contained in the oil encapsulate can consist of, for instance, triglycerides (e.g. vegetable oil), phospholipids (e.g algae oil) or free fatty acids, depending on the origin of the oil. The liquid oil contained in the oil encapsulate typically contains at least 80 wt.% of triglycerides. More preferably the liquid oil contains at least 90 wt.% of triglycerides. Most preferably, at least 98 wt.% of the liquid oil consists of triglycerides.

The liquid oil contained in the oil encapsulate advantageously contains a high amount of unsaturated fatty acids, e.g. at least 50 wt.% of unsaturated fatty acids. Even more preferably, the liquid oil contains at least 60 wt.% of unsaturated fatty acids, most preferably at least 70 wt.% of unsaturated fatty acids. The presence of significant levels of unsaturated fatty acids, especially of polyunsaturated fatty acids, increases the nutritional value of the present edible product in comparison to conventional products that consist of fats comprising low levels of unsaturated fatty acids.

Polyunsaturated fatty acids preferably represent a large fraction of the fatty acids contained in the liquid oil. Preferably, the liquid oil contains at least 30 wt.%, more preferably at least 40 wt.% and most preferably at least 50 wt.% of polyunsaturated fatty acids.

According to a particularly preferred embodiment of the present invention, the liquid oil contained in the oil encapsulate comprises at least 0.6%, more preferably at least 1.0% of ω3-polyunsaturated fatty acids. These ω3-polyunsaturated fatty acids are preferably selected from docosahexaenoic acid (DHA), eicosapentaenoic acid (EPA) and α-linolenic acid (ALA) and combinations thereof.

The liquid oil contained in the oil encapsulate typically has an N₂₅ of less than 5 wt.%. More preferably the liquid oil has an N₂₅ of less than 3 wt.%, most preferably an N₂₅ of less than 1 wt.%.

The fat pieces of the present edible product may contain up to 50 wt.% of a dispersed aqueous phase. Preferably, the discrete fat pieces contain less than 30 wt.% of water, more preferably less than 10 wt.% of water, and most preferably less than 3 wt.% of water.

The encapsulation matrix of the oil encapsulate typically comprises at least 50 wt.% of biopolymer selected from the group consisting of proteins, polysaccharides and combinations thereof. Even more preferably, the latter biopolymer represents at least 70 wt.%, most preferably at least 90 wt.% of the encapsulation matrix.

According to a particularly preferred embodiment, the biopolymer contained in the encapsulation matrix is selected from whey protein, whey protein hydrolysate, casein, caseinate, ovalbumin, hydrolysed ovalbumin, hydrolysed soy protein, gelatin, gums (e.g. gum Arabic), maltodextrin, modified starch, fibers and combinations thereof. More preferably, the biopolymer is selected from whey protein, whey protein hydrolysate, casein, caseinate, gums and maltodextrin. Most preferably, the biopolymer is caseinate.

The edible product according to the present invention advantageously largely consists of fat and oil. Thus, in accordance with a particularly preferred embodiment, the continuous fat phase and the oil contained in the oil encapsulate together constitute at least 60 wt.%, more preferably at least 70 wt.% and most preferably at least 80 wt.% of the edible product.

Likewise, the encapsulation matrix preferably represents only a minor portion of the present edible product. Accordingly, the encapsulation matrix preferably represents less than 25 wt.%, more preferably less than 20 wt.%, and most preferably less than 15 wt.% of the edible product.

In accordance with another preferred embodiment, the fat pieces of the edible product are relatively hard as hard fat pieces tend to exhibit a reduced tendency to stick together. Preferably, the discrete fat pieces have a bulk hardness at 20 °C of at least 100 g more preferably of at least 150 g and most preferably of at least 300 g The hardness of the fat pieces is largely determined by the nature of the continuous fat phase, and especially by the triglyceride composition of the continuous fat phase, as well as the interactions between the dispersed particles (H.M. Schaink et al., J. of Rheology 44, 473-498 (2000)). A person skilled in the art of fat technology has no problem formulating a fat blend that can be employed as a solid, continuous fat phase in the present edible product and that will impart a minimum bulk hardness as mentioned herein before. The bulk hardness of the fat pieces can suitably be measured by a texture analyser (Brookfield CT3, probe TA17, penetration depth 3mm).

Another aspect of the invention relates to a process of preparing a product selected from a foodstuff and a nutritional preparation, said process comprising incorporating into said product 0.3-50 wt.%, preferably 1-40 wt.% of an edible product as defined herein before. Examples of foodstuffs in which the edible product can advantageously be incorporated include bakery products, sauces, soups, creamers and reconstituted drinks.

The invention is further illustrated by means of the following examples.

### EXAMPLES

### Example 1

An oil encapsulate was prepared by the following method. An oil-in-water emulsion having the composition described in Table 1 was made by:
- Adding glucose sirup to a caseinate solution
- adding sunflower oil ,to a caseinate solution
- mixing the two solutions with an Ultra-turrax for 1 minute
- homogenising at 1000/100 bar

**Table 1**

| *Ingredient* | *Concentration (in wt.* %) |
|---|---|
| Sunflower oil | 25.0 |
| Sodium caseinate | 7.0 |
| Glucose syrup | 3.7 |
| Water | 64.3 |

Next, the emulsion was dried on a Mini spray dryer (type B-290, Büchi) using the following process parameters: Tᵢₙₗₑₜ: 180°C and Tₒᵤₜₗₑₜ 90°C. The resulting oil encapsulate had the composition described in Table 2.

**Table 2**

| *Ingredient* | *Concentration (in wt.%)* |
|---|---|
| Sunflower oil | 69.3 |
| Sodium caseinate | 19.4 |
| Glucose syrup | 10.3 |
| Water | 1.0 |

### Example 2

Fat flakes were produced from fatty compositions described in Table 3:

**Table 3**

| *Ingredient* | *Composition A* | *Composition B* | *Composition C* |
|---|---|---|---|
| High melting fat^{#} | 100 wt.% | 70.1 wt.% | 62.0 wt.% |
| Sunflower oil | | 29.9 wt.% | |
| encapsulated sunflower oil (Ex. 1) | | | 26.4 wt.% |

| | | | |
|---|---|---|---|
| ^{#}The high melting fat is palm stearin (N₂₀=67.0%; and N₃₀=46.0%) | | | |

The fatty acid composition of these is depicted in Table 4:

**Table 4**

| | *Composition A* | *Composition B* | *Composition* C |
|---|---|---|---|
| Saturated fatty acids | 67.4 wt.% | 50.6 wt.% | 50.6 wt.% |
| Mono-Unsaturated fatty acids | 26.0 wt.% | 25.3 wt.% | 25.3 wt.% |
| Polyunsaturated fatty acids | 6.4 wt.% | 23.9 wt.% | 23.9 wt.% |

The compositions A to C were prepared by introducing the high melting fat into a vessel and by subsequently melting the fat by heating it to 70 °C. Next, the sunflower oil or encapsulated sunflower oil were added under stirring. The molten homogeneous compositions so obtained were converted into fat flakes by pouring the liquid out on a sheet of aluminium foil. The solidified coating was removed from the foil by a scraper blade and the flakes so formed were recovered and packaged in plastic sample containers.

The packaged flakes were stored at room temperature (18-21°C) for 14 days. After this storage period it was found that most of the fat flakes made from composition B had become stuck together. In contrast, the fat flakes made from compositions A and C had not agglomerated at all during the same storage trial.

### Example 3

Pizza dough was prepared using the recipe described in Table 5

**Table 5**

| | Grams |
|---|---|
| Flour | 550 |
| Water | 240 |
| Dry yeast | 7 |
| Sugar | 6.2 |
| Salt | 12.5 |
| Sunflower oil | 130 |
| Fat flakes | 60 |

Four different fat flakes were tested. The characteristics of these fat flakes are summarized in Table 6.

**Table 6**

| Flakes | | SAFA content |
|---|---|---|
| 1 | an interesterified fat containing palm oil fractions | 74% |
| 2 | an interesterified fat containing a palm oil fraction | 62% |
| 3 | 60 wt.% of the interesterified fat of Flakes 1 + 40 wt.% encapsulated sunflower oil # | 47% |
| 4 | 60 wt.% of the interesterified fat of Flakes 2 + 40 wt.% encapsulated sunflower oil # | 40% |

| | | |
|---|---|---|
| ^{#} This powder is commercial available (contains 78% SF) | | |

The pizzas produced with these doughs were all found to be of acceptable quality.

### Example 4

Vegetarian sausages were produced by first preparing a bean slurry having the composition described in Table 7.

**Table 7**

| | Grams |
|---|---|
| Crushed beans | 90 |
| Water | 144 |
| Sunflower oil | 5 |
| Tomato ketchup | 16 |

The bean slurry was prepared by mixing the ingredients until a homogeneous slurry is obtained. Next, sausages were prepared according to the recipe shown in Table 8.

**Table 8**

| | Grams |
|---|---|
| Bean slurry | 23 |
| Whey protein isolate | 3 |
| Sodium caseinate | 7 |
| Carmine | 1 drop |
| Flakes | 3.4 |
| Tomato ketchup | 1 |

The ingredients listed in Table 8 were mixed and introduced into a plastic casing. The resulting sausage was heated in a water bath for 20 minutes at 95°C and subsequently cooled in ice water.

Two different fat flakes were tested. The characteristics of these fat flakes are summarized in Table 9.

**Table 9**

| Flakes | | SAFA content |
|---|---|---|
| 1 | Palm stearin | 67.4% |
| 2 | 60 wt.% palm stearin + 40 wt.% encapsulated sunflower oil | 43% |

| | | |
|---|---|---|
| ^{#} This powder is commercial available (contains 78% SF) | | |

The two sausages produced with the different fat flakes were found to be indistinguishable.

## Claims

1. An edible product that is composed of a plurality of discrete fat pieces that are in direct contact with each other, each fat piece comprising:
• 15-80 wt.% of a solid continuous fat phase having a solid fat content at 25 °C (N₂₅) of at least 5 wt.%;
• 20-85 wt.% of an oil encapsulate that is homogeneously dispersed throughout the continuous fat phase, said oil encapsulate containing 40-95 wt.% of liquid oil and 5-60 wt.% of an encapsulation matrix that envelops the liquid oil; and
• 0-50 wt.% of a dispersed aqueous phase;
wherein the edible product contains at least 15% of liquid oil by weight of the continuous fat phase and wherein the continuous fat phase, the oil encapsulate and the optional dispersed aqueous phase together represent at least 90 wt.% of the edible product.

2. Edible product according to claim 1, wherein the discrete fat pieces have an average weight of 0.1 mg to 250 g.

3. Edible product according to claim 1 or 2, wherein the discrete fat pieces are selected from flakes, beads, particles, discs, cubes, cylinders and sticks.

4. Edible product according to any one of the preceding claims, wherein the continuous fat phase and the oil contained in the oil encapsulate together constitute at least 60 wt.%, preferably at least 70 wt.% of the edible product.

5. Edible product according to any one of the preceding claims, wherein the continuous fat phase and the oil encapsulate together represent at least 80 wt.% of the edible product, preferably at least 90 wt.% of the edible product.

6. Edible product according to any one of the preceding claims, wherein the oil encapsulate has a weight averaged diameter of 0.02-200 µm.

7. Edible product according to any one of the preceding claims, where the oil encapsulate contains 40-90 wt.% of liquid oil and 10-60 wt.% of an encapsulation matrix.

8. Edible product according to any one of the preceding claims, wherein the product contains 40-500% of liquid oil by weight of the continuous fat phase.

9. Edible product according to any one of the preceding claims wherein the liquid oil contains at least 80 wt.% of oil selected from the group of fish oil, algae oil, sunflower oil, rapeseed oil, linseed oil, soybean oil, maize oil, olive oil, wheat germ oil, rice bran oil and combinations thereof.

10. Edible product according to any one of the preceding claims, wherein the liquid oil contains at least 70% of unsaturated fatty acids by weight of fatty acids.

11. Edible product according to any one of the preceding claims, wherein the discrete fat pieces have a bulk hardness at 20 °C of at least 100g.

12. Edible product according to any one of the preceding claims, wherein the encapsulation matrix comprises at least 50 wt.% of biopolymer selected from the group consisting of proteins, polysaccharides and combinations thereof.

13. Edible product according to claim 12, wherein the biopolymer is selected from whey protein, casein, caseinates, ovalbumin, hydrolysed ovalbumin, hydrolysed soy proteins, gelatin, gums, maltodextrin, modified starch, fibers and combinations thereof.

14. A process of preparing a product selected from a foodstuff and a nutritional preparation, said process comprising incorporating into said product 0.3-50 wt.% of a edible product according to any one of the preceding claims.

## Patentansprüche

1. Essbares Produkt, welches sich aus mehreren einzelnen Fettstücken zusammensetzt, welche in direktem Kontakt miteinander stehen, wobei jedes Fettstück umfasst:
• 15-80 Gew.-% einer festen zusammenhängenden Fettphase mit einem Gehalt an festem Fett bei 25 °C (N₂₅) von wenigstens 5 Gew.-%;
• 20-85 Gew.-% eines eingekapselten Öls bzw. einer Ölkapsel, welche(s) überall in der zusammenhängenden Fettphase homogen dispergiert ist, wobei das eingekapselte Öl bzw. die Ölkapsel 40-95 Gew.-% flüssiges Öl und 5-60 Gew.-% einer Einkapselungsmatrix enthält, welche das flüssige Öl umhüllt; und
• 0-50 Gew.-% einer dispergierten wässrigen Phase;
wobei das essbare Produkt wenigstens 15 % flüssiges Öl, bezogen auf das Gewicht der zusammenhängenden Fettphase, enthält und wobei die zusammenhängende Fettphase, das eingekapselte Öl bzw. die Ölkapsel und die optionale dispergierte wässrige Phase zusammen wenigstens 90 Gew.-% des essbaren Produkts darstellen.

2. Essbares Produkt nach Anspruch 1, wobei die einzelnen Fettstücke ein mittleres Gewicht von 0,1 mg bis 250 g aufweisen.

3. Essbares Produkt nach Anspruch 1 oder 2, wobei die einzelnen Fettstücke ausgewählt sind aus Flocken, Perlen, Teilchen, Scheiben, Würfeln, Zylindern und Stangen bzw. Stiften.

4. Essbares Produkt nach einem der vorangehenden Ansprüche, wobei die zusammenhängende Fettphase und das in dem eingekapselten Öl bzw. der Ölkapsel enthaltene Öl zusammen wenigstens 60 Gew.-%, vorzugsweise wenigstens 70 Gew.-% des essbaren Produkts ausmachen.

5. Essbares Produkt nach einem der vorangehenden Ansprüche, wobei die zusammenhängende Fettphase und das eingekapselte Öl bzw. die Ölkapsel zusammen wenigstens 80 Gew.-% des essbaren Produkts, vorzugsweise wenigstens 90 Gew.-% des essbaren Produkts ausmachen.

6. Essbares Produkt nach einem der vorangehenden Ansprüche, wobei das eingekapselte Öl bzw. die Ölkapsel einen gewichtsgemittelten Durchmesser von 0,02-200 µm aufweist.

7. Essbares Produkt nach einem der vorangehenden Ansprüche, wobei das eingekapselte Öl bzw. die Ölkapsel 40-90 Gew.-% flüssiges Öl und 10-60 Gew.-% einer Einkapselungsmatrix enthält.

8. Essbares Produkt nach einem der vorangehenden Ansprüche, wobei das Produkt 40-500 % flüssiges Öl, bezogen auf das Gewicht der zusammenhängenden Fettphase, enthält.

9. Essbares Produkt nach einem der vorangehenden Ansprüche, wobei das flüssige Öl wenigstens 80 Gew.-% Öl, ausgewählt aus der Gruppe von Fischöl, Algenöl, Sonnenblumenöl, Rapsöl, Leinöl, Sojaöl, Maisöl, Olivenöl, Weizenkeimöl, Reisöl und Kombinationen davon, enthält.

10. Essbares Produkt nach einem der vorangehenden Ansprüche, wobei das flüssige Öl wenigstens 70 % ungesättigte Fettsäuren, bezogen auf das Gewicht der Fettsäuren, enthält.

11. Essbares Produkt nach einem der vorangehenden Ansprüche, wobei die einzelnen Fettstücke eine Grundwerkstoffhärte (bulk hardness) bei 20 °C von wenigstens 100 g aufweisen.

12. Essbares Produkt nach einem der vorangehenden Ansprüche, wobei die Einkapselungsmatrix wenigstens 50 Gew.-% Biopolymer, ausgewählt aus der Gruppe bestehend aus Proteinen, Polysacchariden und Kombinationen davon, umfasst.

13. Essbares Produkt nach Anspruch 12, wobei das Biopolymer ausgewählt ist aus Molkenprotein, Casein, Caseinaten, Ovalbumin, hydrolysiertem Ovalbumin, hydrolysierten Sojaproteinen, Gelatine, Gummen, Maltodextrin, modifizierter Stärke, Fasern und Kombinationen davon.

14. Verfahren zum Herstellen eines Produkts, ausgewählt aus einem Lebensmittel und einem Nährpräparat, wobei das Verfahren das Einarbeiten von 0,3-50 Gew.-% eines essbaren Produkts nach einem der vorangehenden Ansprüche in das Produkt umfasst.

## Revendications

1. Produit comestible composé d'une pluralité de morceaux gras discrets qui sont en contact direct les uns avec les autres, chaque morceau gras comprenant :
- 15 à 80 % en poids d'une phase grasse continue solide ayant une teneur en matières grasses solides à 25°C (N₂₅) d'au moins 5 % en poids ;
- 20 à 85 % en poids d'un encapsulat d'huile dispersé de manière homogène dans toute la phase grasse continue, ledit encapsulat d'huile contenant 40 à 95 % en poids d'huile liquide et 5 à 60 % en poids d'une matrice d'encapsulation qui enveloppe l'huile liquide ; et
- 0 à 50 % en poids d'une phase aqueuse dispersée ;
dans lequel le produit comestible contient au moins 15 % d'huile liquide par poids de la phase grasse continue et dans lequel la phase grasse continue, l'encapsulat d'huile et la phase aqueuse dispersée facultative représentent ensemble au moins 90 % en poids du produit comestible.

2. Produit comestible selon la revendication 1, dans lequel les morceaux gras discrets ont un poids moyen de 0,1 mg à 250 g.

3. Produit comestible selon la revendication 1 ou 2, dans lequel les morceaux gras discrets sont sélectionnés parmi des flocons, des perles, des particules, des disques, des cubes, des cylindres et des baguettes.

4. Produit comestible selon l'une quelconque des revendications précédentes, dans lequel la phase grasse continue et l'huile contenue dans l'encapsulat d'huile constituent ensemble au moins 60 % en poids, de préférence au moins 70 % en poids, du produit comestible.

5. Produit comestible selon l'une quelconque des revendications précédentes, dans lequel la phase grasse continue et l'encapsulat d'huile représentent ensemble au moins 80 % en poids du produit comestible, de préférence au moins 90 % en poids du produit comestible.

6. Produit comestible selon l'une quelconque des revendications précédentes, dans lequel l'encapsulat d'huile présente un diamètre moyen en poids de 0,02 à 200 µm.

7. Produit comestible selon l'une quelconque des revendications précédentes, dans lequel l'encapsulat d'huile contient 40 à 90 % en poids d'huile liquide et 10 à 60 % en poids d'une matrice d'encapsulation.

8. Produit comestible selon l'une quelconque des revendications précédentes, dans lequel le produit contient 40 à 500 % d'huile liquide par poids de la phase grasse continue.

9. Produit comestible selon l'une quelconque des revendications précédentes, dans lequel l'huile liquide contient au moins 80 % en poids d'huile sélectionnée parmi le groupe composé de l'huile de poisson, l'huile d'algue, l'huile de tournesol, l'huile de colza, l'huile de lin, l'huile de soja, l'huile de maïs, l'huile d'olive, l'huile de germe de blé, l'huile de son de riz et des combinaisons de celles-ci.

10. Produit comestible selon l'une quelconque des revendications précédentes, dans lequel l'huile liquide contient au moins 70 % d'acides gras insaturés par poids d'acides gras.

11. Produit comestible selon l'une quelconque des revendications précédentes, dans lequel les morceaux gras discrets ont une dureté de la masse à 20°C d'au moins 100 g.

12. Produit comestible selon l'une quelconque des revendications précédentes, dans lequel la matrice d'encapsulation comprend au moins 50 % en poids de biopolymère sélectionné parmi le groupe composé des protéines, des polysaccharides et des combinaisons de ceux-ci.

13. Produit comestible selon la revendication 12, dans lequel le biopolymère est sélectionné parmi la protéine de lactosérum, la caséine, les caséinates, l'ovalbumine, l'ovalbumine hydrolysée, les protéines de soja hydrolysées, la gélatine, les gommes, la maltodextrine, l'amidon modifié, les fibres et les combinaisons de ceux-ci.

14. Procédé de préparation d'un produit sélectionné parmi une denrée alimentaire et une préparation nutritionnelle, ledit procédé comprenant l'incorporation dans ledit produit de 0,3 à 50 % en poids d'un produit comestible selon l'une quelconque des revendications précédentes.
